(19) **Europäisches Patentamt / European Patent Office / Office européen des brevets**

(11) **EP 1 269 408 B1**

(12) **EUROPEAN PATENT SPECIFICATION**

(45) Date of publication and mention
of the grant of the patent:
**20.01.2010 Bulletin 2010/03**

(21) Application number: **01916026.6**

(22) Date of filing: **21.03.2001**

(51) Int Cl.:
***G06F 3/03*** (2006.01)

(86) International application number:
**PCT/SE2001/000610**

(87) International publication number:
**WO 2001/071654 (27.09.2001 Gazette 2001/39)**

(54) **APPARATUS AND METHOD FOR DETERMINING SPATIAL ORIENTATION**

VORRICHTUNG UND VERFAHREN ZUR BESTIMMUNG DER RÄUMLICHEN ORIENTIERUNG

APPAREIL ET PROCEDE PERMETTANT DE DETERMINER UNE ORIENTATION SPATIALE

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **21.03.2000 SE 0000951**

(43) Date of publication of application:
**02.01.2003 Bulletin 2003/01**

(73) Proprietor: **Anoto AB
227 22 Lund (SE)**

(72) Inventors:
• **FÅHRAEUS Christer
  S-223 62 Lund (SE)**
• **BURSTRÖM, Stefan
  S-226 45 Lund (SE)**
• **PERSSON, Erik;
  222 41 Lund (SE)**
• **PETTERSSON, Mats, Petter
  S-226 44 Lund (SE)**

(56) References cited:
**WO-A1-94/10652      US-A- 4 403 339
US-A- 5 101 096      US-A- 5 652 412
US-A- 5 661 506**

EP 1 269 408 B1

## Description

## TECHNICAL FIELD

The present invention relates to methods and apparatuses for determining the spatial relationship of an input apparatus to a surface.

## BACKGROUND

For the input of information into computerized equipment, use is made in many applications of, for example, a pointing device, often referred to as a computer mouse, or digitizing pens. A feature common to input devices of these types is that in most cases they supply only information which can be directly related to two spatial dimensions.

A typical computer mouse is moved on top of a plane surface, and coded information about the movement of the mouse on the surface is supplied to a computer via mechanical rolling arrangements, electromechanical circuits and coding logic.

A digitizing pen can be designed with an optical or electric sensor in its tip, and contact with a digitizing tablet designed for the purpose generates signals, analog or digital, which can be interpreted in a computer in terms of the contact position of the pen tip on the tablet.

In some applications, it is also desirable to obtain information from a pointing device or a digitizing pen about, for example, its inclination or, more generally, its position in relation to the surface with which it is in contact or to which it is near.

According to the known art, this has often been achieved by means of relatively complicated electrical arrangements in the pointing device and a base intended specifically for the pointing device. An example of this known art can be seen in US Patent Specification 5,198,623 which discloses a method in a digitizing arrangement for establishing the tilting angle of a pen forming part of the arrangement. The pen has a coil which, in interaction with an array of electrical conductors in a digitizing tablet, generates electrical pulses. The electrical pulses are analyzed with regard to pulse form, a measurement thus being obtained of the tilt of the pen in relation to the surface of the tablet.

The arrangements and the method disclosed in US 5,198,623 comprise a great many electrical components, which can be seen as a disadvantage when simple and inexpensive solutions are being sought.

It can also be seen as a disadvantage that it is necessary for the pen to interact with a special digitizing tablet. A user is therefore tied to a specific combination of pen and base.

A method and an apparatus for recording data from a sheet is disclosed in US 5,101,096. Data in the form of optical recording dots arranged in perpendicular lines and columns are detected by a two dimensional (CCD) optical line sensor. An inclination angle is calculated between the optical recording lines and the optical line sensor. The inclination angle is then used to restore the detected data.

However, the method and arrangement disclosed in US 5, 101, 096 is only directed to solve a problem of compensating for a misalignment between the optical recordings arranged in straight lines and the CCD-detector elements that are arranged in similar lines and columns. US 5,101,096 hence fails to show how to calculate any misalignment due to the lines of the recordings and the detector not being parallel.

A generally emphasized problem related to the previously known art is therefore how a more general determination of spatial relationship between, for example, a digitizing pen and a patterned surface is to be made possible in a flexible and simple manner.

US 5,611,506 discloses a system for determining an electronic representation of information written by a pen on a writing paper carrying a prerecorded invisible pattern of pixels. Each pixel encodes a coordinate position, and orientation information is embedded in the pixel design. While being used for writing, the pen generates image signals representative of images of pixels near the pen tip. A recording/processing unit coupled to the pen determines the electronics representation based on the image signals.

## SUMMARY OF THE INVENTION

One object of the present invention is therefore to solve problems related to the previously known art. This is achieved by means of an apparatus according to claim 1 below, and a method and a computer program according to claims 16 and 29.

According to the invention, an apparatus and a corresponding method for determining a three-dimensional spatial relationship between a surface provided with a predetermined pattern and the apparatus are disclosed. A part of the surface is imaged in the apparatus, after which the image is compared with the predetermined pattern. The comparison produces at least one reference measurement, by means of which it is possible to determine the spatial relationship expressed in at least the parameters which define the orientation of the surface. By using knowledge of the predetermined pattern together with an algebraic model of the image formation by the apparatus, a numerical adaptation can be carried out. Parameters obtained from the adaptation can then be used to calculate the spatial relationship between the apparatus and the surface in terms of, for example, a distance between the apparatus and the surface or an angle between the surface and an axis extending through the apparatus. In a preferred embodiment, said adaptation will be discussed in detail when a surface with a dot pattern is used.

One effect of the invention is therefore that, by comparing a predetermined pattern with an image of the pattern, an assessment of, for example, the rotation, tilt and skew of the apparatus as well as the distance between the apparatus and the patterned surface can be obtained. As is known in the art, the orientation of a device such as a pen with respect to the pattern on the surface can be expressed using three numbers: rotation, tilt and skew. The skew is defined as the angle of rotation of the pen around its rotational axis. The tilt angle is the angle the pen extends with respect to a normal vector to the surface and the rotation is the angle of rotation of the pen with respect to the normal vector. A zero tilt implies that the rotation is equal to the skew.

One advantage of an apparatus and a corresponding method as above is of course that no complicated electrical arrangement is required, as is the case in the known art. Only processing means, which are suitably programmed by software, are required in order to obtain the desired measurement of the spatial positional relationship between the apparatus and the surface.

According to the present invention, an apparatus and a method for position determination are disclosed. An image is produced of one partial surface of a number of partial surfaces on a surface which is provided with a position-coding pattern. Image-processing is carried out with regard to this image, which comprises locating a predetermined plurality of symbols in the image and determining the value of each of these predetermined symbols. The symbols comprise a raster point and at least one marking, the raster point forming part of a raster which extends over the surface, and the value of each symbol being indicated by the position of said marking in relation to a raster point.

The position-coding pattern which has been imaged is separated into a first position code for a first coordinate for the partial surface and a second position code for a second coordinate for the partial surface. The first coordinate is then calculated by means of the first position code, and the second coordinate is calculated by means of the second position code. A third coordinate is calculated by comparing the imaged part of the pattern with the predetermined pattern, at least one reference measurement being obtained, which depends on the orientation of the surface. Reference measurements determine the spatial relationship expressed in at least the parameters which define the orientation of the surface. This spatial relationship then determines the third coordinate.

The first two coordinates are thus obtained by interpreting the symbols, where displacements of the markings forming part of the symbols in relation to a normal position contain information in the form of the two-dimensional positions on the surface read. The third coordinate is calculated by means of the information obtained from the distortion of the known pattern which occurs on image formation by the apparatus, the image formed being for the most part affected by the relative spatial positional relationship between the reading apparatus and the patterned surface. For example, the pattern in the image formed is distorted in perspective when reading is carried out in a direction which does not lie in the normal direction in relation to the surface. Moreover, the imaged pattern is changed in terms of scale when reading is carried out with the apparatus located at a greater distance from the surface.

In a corresponding manner to that in the first aspect described above, a reference measurement can be used in order to calculate the three-dimensional spatial relationship between the apparatus and the surface. With this, it is possible to determine, for example, a distance between the apparatus and the surface or an angle between the surface and an axis extending through the apparatus. These measurements can then be used in a mathematically simple manner for determining the third coordinate.

According to the invention, a pointing device can therefore be produced which can supply coordinates which represent three dimensions to, for example, a computer. The application in the computer using the three-dimensional positional information, including rotation, tilt and skew can of course be of different types. Particularly interesting are applications relating to calligraphy. Calligraphy applications include those applications of drawing/writing where the device is used as a brush. In these applications the rotation, tilt and skew of the device, as determined in accordance with the invention, may be used to represent, on a display or when printing, a digitized trail made with the device. If combined with an assumed or selected shape of a virtual brush, such a trail will on screen or in print, have the characteristics of a trail made manually by a person using a brush, i.e. a trail with varying widths. It is also possible to utilize, e.g., the information regarding the distance between the pen and the surface, as determined by the invention, to represent a color density of the trail when presenting it on a screen or on paper, thus further enhancing the likeness with a manually painted trail.

Moreover, general applications relating to biometrics, i.e. measuring of the movement of, e.g., a hand which holds and moves the device. Such an application is signature recognition.

Advantages of the invention include the fact that it can be implemented in an apparatus without moving parts and does not require the use of complicated, expensive bases in the form of digitizing tablets full of electronics. An apparatus according to the invention is preferably produced using optical components and an image-processing processor which reads a pattern on, for example, a sheet of paper, the complexity of which in terms of physical construction is, to say the least, reduced in comparison with a digitizing tablet according to the known art.

**BRIEF DESCRIPTION OF THE DRAWINGS**

Fig. 1 shows schematically an embodiment of a product provided with a position-coding pattern,

Figs 2a-2d show schematically how the symbols can be designed in an embodiment of the invention,

Fig. 3 shows schematically an example of 4x4 symbols used to code a position,

Fig. 4 shows schematically an apparatus according to the present invention, which can be used for position determination in three dimensions,

Fig. 5 shows schematically how a pattern on a surface is imaged in an apparatus according to the invention, and

Fig. 6 shows how a pattern is distorted in an image formed in an apparatus according to the invention.

**DESCRIPTION OF PREFERRED EMBODIMENTS**

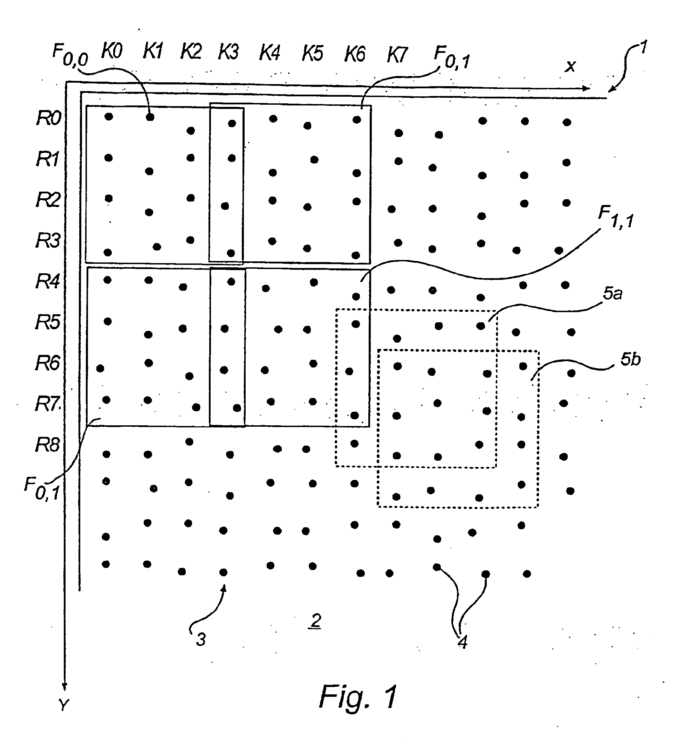

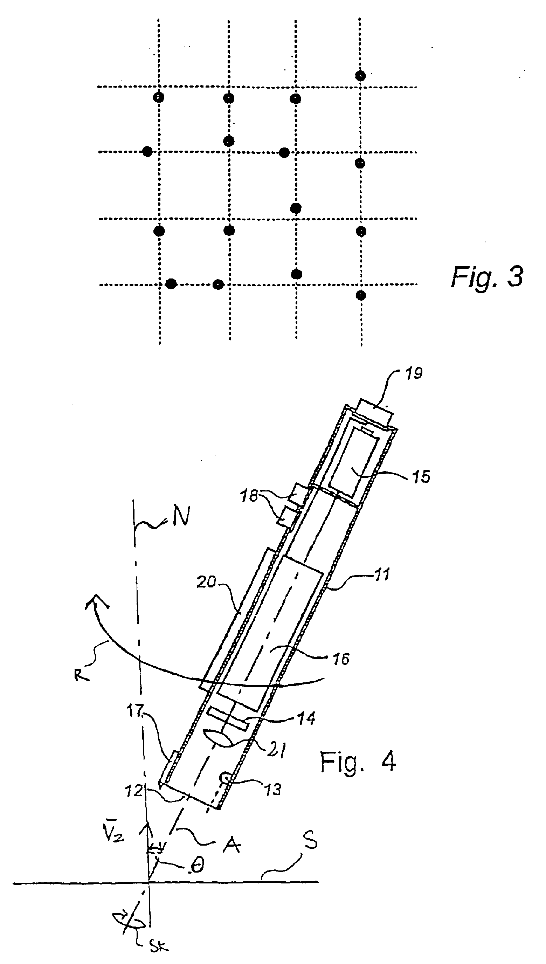

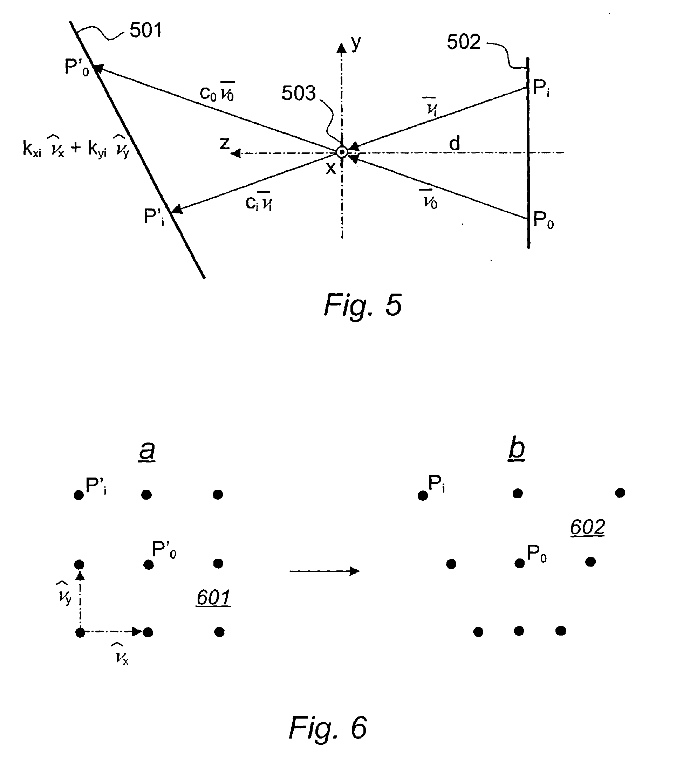

For the sake of clarity, the detailed description below of the invention has been divided into a number of part descriptions. By way of introduction, a coding pattern will be described with reference to Figs 1, 2a-d and 3. As outlined above, this coding pattern can represent positional information but can also represent other information. After the description of the coding pattern, an apparatus intended to read the pattern will then be described with reference to Fig. 4. The way a pattern can be used for calculating spatial orientation of an apparatus reading the pattern will then be described with reference to Figs 5 and 6.

Although only one example of a coding pattern will be used in illustrating the invention, it is possible to make use of any other suitable coding pattern. Examples of such patterns are to be found in US-A-5,852,434 (Sekendur), US-A-5,051,736 (IBM), EP-A-0 469 864 (Xerox) as well as our own disclosure WO 00/73983. Moreover, the coding pattern used below is described in some more detail in our own disclosures PCT/SE00/01895 (WO 01/26032), PCT/SE00/01897 (WO 01/26033) and WO 01/16691 hereby also included by reference.

Fig. 1 shows a part of a product in the form of a sheet of paper 1 which, on its surface 2, is provided with an optically readable position-coding pattern 3 enabling position determination. The position-coding pattern consists of symbols 4 which are arranged systematically across the surface 2 so as to make its appearance "patterned". The sheet of paper has an x-coordinate axis and a y-coordinate axis. In this case, position determination can be carried out on the entire surface of the product. In other cases, the surface allowing position determination may constitute a smaller part of the product. The sheet of paper can be used, for example, to produce an electronic representation of information which is written or drawn on the surface. The electronic representation can be produced by continuously determining, while writing on the surface with a pen, the position of the pen on the sheet of paper by reading the position-coding pattern.

The position-coding pattern comprises a virtual raster which therefore neither is visible to the human eye nor can be detected directly by an apparatus which is to determine positions on the surface, and a plurality of symbols 4 which are each capable of assuming one of four values "1"-"4" as will be described below. It should be pointed out here that, for the sake of clarity, the position-coding pattern in Fig. 1 has been greatly enlarged. Furthermore, the position-coding pattern is shown on only part of the sheet of paper.

The position-coding pattern is arranged in such a manner that the position of a partial surface on the writing surface is coded by the symbols on this partial surface. A first and a second partial surface 5a, 5b are indicated by dashed lines in Fig. 1. That part of the position-coding pattern (in this case 3x3 symbols) which is present on the first partial surface 5a codes a first position, and that part of the position-coding pattern which is present on the second partial surface 5b codes a second position. The position-coding pattern is therefore partly common to the adjoining first and second positions. Such a position-coding pattern is referred to in this application as "floating".

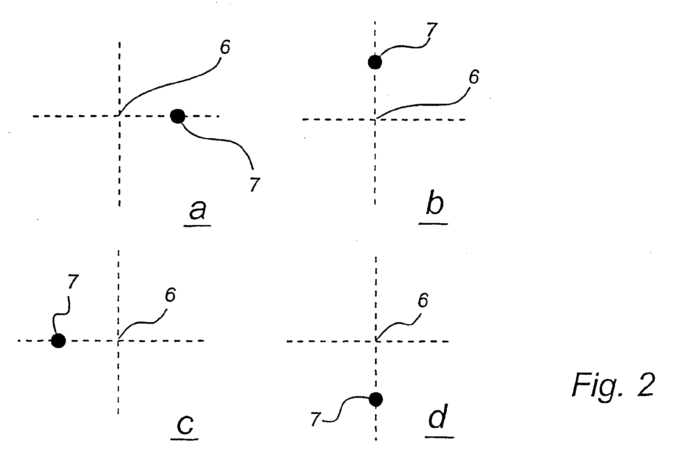

Figs 2a-d show an embodiment of a symbol which can be used in the position-coding pattern according to the invention. The symbol comprises a virtual raster point 6 which is represented by the intersection between the raster lines, and a marking 7 which is in the form of a dot. The value of the symbol depends on where the marking is located. In the example in Fig. 2, there are four possible positions, one on each of the raster lines extending from the raster points. The displacement from the raster point is equal for all the values. In the following, the symbol has the value 1 in Fig. 2a, the value 2 in Fig. 2b, the value 3 in Fig. 2c and the value 4 in Fig. 2d. In other words, there are four different types of symbol.

Each symbol can thus represent four values "1-4". This means that the position-coding pattern can be divided into a first position code for the x-coordinate, and a second position code for the y-coordinate. The division is effected as follows:

| Symbol value | x-code | y-code |
|:---:|:---:|:---:|
| 1 | 1 | 1 |
| 2 | 0 | 1 |
| 3 | 1 | 0 |
| 4 | 0 | 0 |

The value of each symbol is therefore translated into a first digit, in this case bit, for the x-code and a second digit, in this case bit, for the y-code. In this manner, two completely independent bit patterns are obtained. The patterns can be combined to form a common pattern which is coded graphically by means of a plurality of symbols according to Fig. 2.

Each position is coded by means of a plurality of symbols. In this example, use is made of 4x4 symbols to code a position in two dimensions, that is to say an x-coordinate and a y-coordinate.

The position code consists of a number series of ones and zeros which have the characteristic that no sequence of four bits appears more than once in the series. The number series is cyclic, which means that the characteristic also applies when the end of the series is connected to its beginning. Thus a four-bit sequence always has an unambiguously determined position in the number series.

The series can be at most 16 bits long if it is to have the characteristic described above for sequences of four bits. In this example, however, use is made of a series having a length of only seven bits as follows:

"0 0 0 1 0 1 0".

This series contains seven unique sequences of four bits which code a position in the series as follows:

| Position in the series | Sequence |
|:---:|:---:|
| 0 | 0001 |
| 1 | 0010 |
| 2 | 0101 |
| 3 | 1010 |
| 4 | 0100 |
| 5 | 1000 |
| 6 | 0000 |

For coding the x-coordinate, the number series is written sequentially in columns across the entire surface that is to be coded. The coding is based on the difference or positional displacement between numbers in adjacent columns. The size of the difference is determined by the position (that is to say the sequence) in the number series, with which the column is made to begin. More specifically, taking the difference modulo seven between, on the one hand, a number which is coded by a four-bit sequence in a first column and which can thus have the value (position) 0-6, and, on the other hand, a corresponding number (that is to say the sequence on the same "level") in an adjacent column, the result will be the same irrespective of where along the two columns the comparison is made. By means of the difference between two columns, it is therefore possible to code an x-coordinate which is constant for all y-coordinates.

Since each position on the surface is coded with 4x4 symbols in this example, three differences (having the value 0-6) as stated above are available to code the x-coordinate. The coding is then carried out in such a manner that, of the three differences, one will always have the value 1 or 2 and the other two will have values in the range 3-6. Consequently, no differences are allowed to be zero in the x-code. In other words the x-code is structured so that the differences will be as follows: (3-6) (3-6) (1-2) (3-6) (3-6) (1-2) (3-6) (3-6) (1-2)...

Each x-coordinate is therefore coded with two numbers between 3 and 6 and a subsequent number which is 1 or 2. If three is subtracted from the high numbers and one from the low, a number in mixed base will be obtained, which directly yields a position in the x-direction, from which the x-coordinate can then be determined directly, as shown in the example below.

By means of the principle described above, it is thus possible to code x-coordinates 0,1,2 etc. by means of numbers representing three differences. These differences are coded with a bit pattern which is based on the number series above. The bit pattern can finally be coded graphically by means of the symbols in Fig. 2.

In many cases, when reading 4x4 symbols, a complete number which codes the x-coordinate will not be produced, but parts of two numbers. Since the least significant part of the numbers is always 1 or 2, however, a complete number can easily be reconstructed.

The y-coordinates are coded according to the same principle as is used for the x-coordinates. The cyclic number series is repeatedly written in horizontal rows across the surface which is to be position-coded. In exactly the same way as for the x-coordinates, the rows are made to begin in different positions, that is to say with different sequences, in the number series. However, for the y-coordinates, use is not made of differences, but coordinates are coded with numbers that are based on the starting position of the number series on each row. This is because, when the x-coordinate for 4x4 symbols has been determined, it is possible to determine the starting positions in the number series for the rows that are included in the y-code in the 4x4 symbols. In the y-code, the most significant digit is determined by letting this be the only one that has a value in a specific range. In this example, one row of four is made to begin in the position 0-1 in the number series to indicate that this row relates to the least significant digit in a y-coordinate, and the other three are made to begin in the position 2-6. In the y-direction, there is thus a series of numbers as follows:

(2-6) (2-6) (2-6) (0-1) (2-6) (2-6) (2-6) (0-1) (2-6) ...

Each y-coordinate is thus coded with three numbers between 2 and 6 and a subsequent number between 0 and 1.

If 0 is subtracted from the low number and 2 from the high numbers, a position in the y-direction in mixed base, from which it is possible to determine the y-coordinate directly, is obtained in the same manner as for the x-direction.

With the above method, it is possible to code
4 x 4 x 2 = 32 positions in the x-direction. Each such position corresponds to three differences, which gives 3 x 32 = 96 positions. Moreover, it is possible to code 5 x 5 x 5 x 2 = 250 positions in the y-direction.

Each such position corresponds to 4 rows, which gives 4 x 250 = 1000 positions. Altogether it is thus possible to code 96000 positions. Since the x-coding is based on differences, however, it is possible to select the position in which the first number series begins. Taking account of the fact that this first number series can begin in seven different positions, it is possible to code 7 x 96000 = 672000 positions. The starting position of the first number series in the first column can be calculated when the x-coordinate has been determined. The above-mentioned seven different starting positions for the first series may code different sheets of paper or writing surfaces on a product.

With a view to further illustrating the invention according to this embodiment, a specific example follows, which is based on the described embodiment of the position code.

Fig. 3 shows an example of an image with 4x4 symbols which are read by an apparatus for position determination.

These 4x4 symbols have the following values:

| | | | |
|---|---|---|---|
| 4 | 4 | 4 | 2 |
| 3 | 2 | 3 | 4 |
| 4 | 4 | 2 | 4 |
| 1 | 3 | 2 | 4 |

These values represent the following binary x- and y-codes:

| x-code: | | | | y-code: | | | |
|---|---|---|---|---|---|---|---|
| 0 | 0 | 0 | 0 | 0 | 0 | 0 | 1 |
| 1 | 0 | 1 | 0 | 0 | 1 | 0 | 0 |
| 0 | 0 | 0 | 0 | 0 | 0 | 1 | 0 |
| 1 | 1 | 1 | 0 | 1 | 0 | 1 | 0 |

The vertical x-sequences code the following positions in the number series: 2 0 4 6. The differences between the columns will be -2 4 2, which modulo 7 gives: 5 4 2, which in mixed base codes the position (5-3) x 8 + (4-3) x 2 + (2-1) = 16 + 2 + 1 = 19. Since the first coded x-position is position 0, the difference which is in the range 1-2 and which can be seen in the 4x4 symbols is the twentieth such difference. Since, furthermore, there is a total of three columns for each such difference and there is a starting column, the vertical sequence furthest to the right in the 4x4 x-code belongs to the 61st column in the x-code (3 x 20 + 1 = 61) and the one furthest to the left belongs to the 58th.

The horizontal y-sequences code the positions 0 4 1 3 in the number series. Since these series begin in the 58th column, the starting position of the rows is these numbers minus 57 modulo 7, which yields the starting positions 6 3 0 2. Translated into digits in the mixed base, this will be 6-2, 3-2, 0-0, 2-2 = 4 1 0 0, where the third digit is the least significant digit in the number in question. The fourth digit is then the most significant digit in the next number. In this case, it must be the same as in the number in question. (The exception is when the number in question consists of the highest possible digits in all positions. It is then known that the beginning of the next number is one greater than the beginning of the number in question.)

The position of the four-digit number will then be 0x50 + 4x10 + 1x2 + 0x1 = 42 in the mixed base.

The third row in the y-code is thus the 43rd which has the starting position 0 or 1, and, since there are four rows in all on each such row, the third row is number 43x4=172.

In this example, the position of the uppermost left corner for the 4x4 symbol group is thus (58,170).

Since the x-sequences in the 4x4 group begin on row 170, the x-columns of the entire pattern begin in the positions of the number series ((2 0 4 6) -169) modulo 7 = 1 6 3 5. Between the last starting position (5) and the first starting position, the numbers 0-19 are coded in the mixed base, and, by adding up the representations of the numbers 0-19 in the mixed base, the total difference between these columns is obtained. A primitive algorithm for carrying this out is to generate these twenty numbers and directly add up their digits. The resulting sum is called s. The sheet of paper or writing surface will then be identified by (5-s) modulo 7.

In the example above, an embodiment has been described, in which each position is coded with 4 x 4 symbols, and a number series with 7 bits is used. Of course, this is only an example. Positions can be coded with a greater or smaller number of symbols. The number of symbols need not be the same in both directions. The number series can be of different length and need not be binary, but may be based on another base. Different number series can be used for coding in the x-direction and coding in the y-direction. The symbols can have different numbers of values.

In the example above, the marking is a dot but may, of course, have a different appearance. For example, it may consist of a dash which begins in the virtual raster point and extends from it to a defined position.

In the example above, the symbols within a square partial surface are used for coding a position. The partial surface may have a different shape, for example hexagonal. The symbols need not be arranged in rows and columns at an angle of 90˚ to each other but can also be arranged in some other manner.

For the position code to be detectable, the virtual raster must be determined. This can be carried out by studying the distance between different markings. The shortest distance between two markings must derive from two neighboring symbols having the value 1 and 3 so that the markings are located on the same raster line between two raster points. When such a pair of markings has been detected, the associated raster points can be determined with knowledge of the distance between the raster points and the displacement of the markings from the raster points. Once two raster points have been located, additional raster points can be determined by means of measured distances to other markings and with knowledge of the distance of the raster points from one another.

An embodiment of an apparatus for position determination, the spatial relationship of which to a surface can be determined, is shown schematically in Fig. 4. The apparatus comprises a casing 11 having approximately the shape of a pen. In one short side of the casing there is an opening 12. The short side is intended to bear against or be held a short distance from a surface S on which position determination is to be carried out. In the Figure, a normal direction $\overline{v}_z$ to the surface S and an axis A extending through the apparatus are indicated. The axis A forms an angle of inclination, or tilt, θ to the normal direction $\overline{v}_z$.

The casing contains essentially an optics part, an electronics part, and a power supply.

The optics part comprises at least one light emitting diode 13 for illuminating the surface which is to be imaged and a light-sensitive area sensor 14, such as a CCD or CMOS sensor, for recording a two-dimensional image. The apparatus may also comprise a lens system including a schematically illustrated lens 21.

The power supply to the apparatus is obtained from a battery 15 which is mounted in a separate compartment in the casing.

The electronics part comprises image-processing means 16 for determining a position on the basis of the image recorded by the sensor 14 and, more specifically, a processor unit with a processor which is programmed to read images from the sensor and to carry out position determination on the basis of these images.

In this embodiment, the apparatus also comprises a pen point 17, by means of which it is possible to write ordinary pigment-based writing on the surface on which position determination is to be carried out. The pen point 17 is extendable and retractable so that the user can control whether or not it is to be used. In certain applications, the apparatus need not have a pen point at all or comprise a fixed, non-retractable, pen point.

Moreover, the device may comprise a plurality of retractable pen points, each having, e.g., a different color.

Moreover, the apparatus comprises buttons 18 by means of which the apparatus is activated and controlled. It also comprises a transceiver 19 for wireless transmission, for example using IR light or radio waves, of information to and from the apparatus. The apparatus can also comprise a display 20 for showing positions or recorded information.

Applicant's International Patent application WO 98/20446 describes a device for recording text. This device can be used for position determination if programmed in a suitable way. If it is to be used for pigment-based writing, it must also have a pen point.

The device can be divided into various physical casings, a first casing containing components required for capturing images of the position-coding pattern and for transferring them to components which are located in a second casing and carry out position determination on the basis of the recorded image or images.

As mentioned above, position determination is carried out by a processor which must therefore have software to locate and decode the symbols in an image and to determine positions on the basis of the codes thus obtained. A person skilled in the art can, starting from the example above, design software which carries out position determination on the basis of an image of part of a position-coding pattern.

Moreover, the skilled person can, on the basis of the above description, design software for printing the position-coding pattern.

In the embodiment above, the pattern is optically readable and the sensor is therefore optical. As mentioned above, the pattern can be based on a parameter other than an optical parameter. Obviously, in that case the sensor must be of a type which can read the parameter in question. Examples of such parameters are of chemical, acoustical or electromagnetic character, e.g. resistance, capacitance and inductance.

In the embodiment above, the raster is a rectangular grid. It can also have other forms, i.e. non-rectangular.

In the embodiment above, the longest possible cyclic number series is not used. Thus, there is a certain amount of redundancy which can be used, for example, to check the rotation of the group of symbols read.

With reference to Figs 5 and 6, an explanation follows of how a grid of markings, or dots, is distorted on image formation and how this distortion is used for calculating the spatial orientation of an apparatus reading the pattern or, more correctly, the relative spatial orientation between the patterned surface and the reading apparatus.

The actual calculations are performed in processing means, such as those discussed above in connections with figure 4, that is a processor within the device itself. It is also feasible to perform the calculations in an external processor connected to the reading device. The software which performs the calculations is written in accordance with the mathematical expressions to follow and it is assumed that the person skilled in the art will choose suitable tools for performing such programming. The software may be present, or stored, in any form known in the art, such as any volatile or non-volatile memory units capable of being connected to the processor, such as a diskette or a CD-ROM, as well as propagated signals such as the stream of bits that represent Internet transmission of packets or the carrier waves that are transmitted to satellites.

Fig. 6a shows schematically the pattern 601 as it appears when it is applied to a surface. The pattern is preferably in the form of such a position-coding pattern as is described above in connection with Figs 1-3. While it is true that, in the patterns used as examples previously, a plurality of the markings are displaced in relation to an orthogonal raster, these displacements are assumed to be relatively small and thus of minor significance in this embodiment. The displacements may also, however, be part of a larger plurality of predetermined vectors which in that case are also incorporated in the calculations.

In the discussion to follow, it is assumed that the sensor (i.e. sensor 14 in figure 4) is arranged such that its normal direction is parallel with the direction of extension of the device. The person skilled in the art may adapt the calculations to allow for other relations between the sensor normal direction and the device.

The points in the square grid, as illustrated in Fig. 6a, are imaged through a lens 503, e.g. lens 21 in figure 4, on the surface 502 of a sensor located in the reading apparatus. The pattern 602 on the sensor surface is, as shown in Fig. 6b, distorted because the relative spatial orientation between the reading apparatus and the patterned surface is not orthogonal.

In this case, the pattern is characterized in that inherent stretches are described by the predetermined two-dimensional vectors

$$\{a : a = k_{xi}\hat{x} + k_{yi}\hat{y}\}$$

where $k_{xi}$, $k_{yi}$ are integers and $\hat{x}$, $\hat{y}$ are two-dimensional base vectors. This pattern is to be compared with the distorted image on the sensor surface.

In order to model the image formation through the lens system, a coordinate system is selected which is fixed in relation to the sensor and the lens and in which the lens is located at the origin. It is assumed that all the light rays from the surface to the sensor pass unrefracted through the origin. The degrees of freedom of the model are the distance to and the orientation of the patterned surface.

A point $P_0$ on the sensor is selected. The stretch from $P_0$ to the lens is defined by the vector $\bar{v}_0$. In the same manner, a vector $\bar{v}_i$ belonging to the point $P_i$ is defined. Given this model of image formation, a vector $\bar{v}_k$ from the origin to the point $P_k$ in the image on the sensor will be parallel to the vector $\bar{v}'_k$ from the origin to the corresponding point $P'_k$ on the patterned surface:

$$\bar{v}'_k = c_k v_k$$

Two spatial vectors $\hat{v}_x$ and $\hat{v}_y$ can be introduced, which lie in the plane of the patterned surface and constitute base vectors for the grid as it is rotated in space. By using the predetermined vectors, the vector from the point $P'_0$ in the pattern on the surface to any other point $P'_i$ is, expressed in $\hat{v}_x$ and $\hat{v}_y$, given by:

$$v'_i - v'_0 = k_{xi}\hat{v}_x + k_{yi}\hat{v}_y$$

where the integers $k_{xi}$, $k_{yi}$ describe the integer position of a point in the grid relative to $P'_0$. We can thus describe a relationship according to Fig. 5:

$$c_o \bar{v}_o + k_{xi}\hat{v}_x + k_{yi}\hat{v}_y = c_i \bar{v}_i$$

By introducing the vectors

$$\bar{v}_x \equiv \frac{1}{c_0}\hat{v}_x \, , \quad \bar{v}_y \equiv \frac{1}{c_0}\hat{v}_y$$

the following is obtained:

$$\bar{v}_o + k_{xi}\bar{v}_x + k_{yi}\bar{v}_y = \frac{c_i}{c_0}\bar{v}_i$$

An equation for each dimension is then:

$$\begin{cases} v_{0x} + k_{xi}v_{xx} + k_{yi}v_{yx} = \dfrac{c_i}{c_0}v_{ix} \\[2mm] v_{0y} + k_{xi}v_{xy} + k_{yi}v_{yy} = \dfrac{c_i}{c_0}v_{iy} \\[2mm] v_{0z} + k_{xi}v_{xz} + k_{yi}v_{yz} = \dfrac{c_i}{c_0}v_{iz} \end{cases}$$

Division results in identical right-hand parts:

$$\begin{cases} \dfrac{v_{0x}}{v_{ix}} + \dfrac{k_{xi}}{v_{ix}}v_{xx} + \dfrac{k_{yi}}{v_{ix}}v_{yx} = \dfrac{c_i}{c_0} \\[2em] \dfrac{v_{0y}}{v_{iy}} + \dfrac{k_{xi}}{v_{iy}}v_{xy} + \dfrac{k_{yi}}{v_{iy}}v_{yy} = \dfrac{c_i}{c_0} \\[2em] \dfrac{v_{0z}}{v_{iz}} + \dfrac{k_{xi}}{v_{iz}}v_{xz} + \dfrac{k_{yi}}{v_{iz}}v_{yz} = \dfrac{c_i}{c_0} \end{cases}$$

For each point $P_i$, there is therefore an equation system of the type:

$$a_{xi} + b_{xi}v_{xx} + c_{xi}v_{yx} = a_{yi} + b_{yi}v_{xy} + c_{yi}v_{yy} = a_{zi} + b_{zi}v_{xz} + c_{zi}v_{yz} \qquad (1)$$

where the unknowns are:

$$(v_{xx}\;\; v_{xy}\;\; v_{xz}) \equiv \bar{v}_x \quad \text{and} \quad (v_{yx}\;\; v_{yy}\;\; v_{yz}) \equiv \bar{v}_y$$

If the number of points is greater than five, there is a redundant equation system in, for example, $v_{xx}, v_{xy}, v_{yx}$ and $v_{yy}$:

$$\begin{pmatrix} b_{x1} & -b_{y1} & c_{x1} & -c_{y1} \\ b_{x2} & -b_{y2} & c_{x2} & -c_{y2} \\ \cdot & \cdot & \cdot & \cdot \\ \cdot & \cdot & \cdot & \cdot \\ \cdot & \cdot & \cdot & \cdot \\ b_{xn} & -b_{yn} & c_{xn} & -c_{yn} \end{pmatrix} \begin{pmatrix} v_{xx} \\ v_{xy} \\ v_{yx} \\ v_{yy} \end{pmatrix} = \begin{pmatrix} a_{y1} - a_{x1} \\ a_{y2} - a_{x2} \\ \cdot \\ \cdot \\ \cdot \\ a_{yn} - a_{xn} \end{pmatrix}$$

The least square method gives $v_{xx}, v_{xy}, v_{yx}$ and $v_{yy}$. $v_{xx}$ and $v_{xy}$ are inserted into equation (1) and a similar equation system is obtained for $v_{xy}$ and $v_{yz}$ which is also solved by means of the least square method.

The direction of the vectors $\bar{v}_x$ and $\bar{v}_y$ is thus known, and in this way the spatial orientation of the pattern read has been determined.

The vectors $\bar{v}_x$ and $\bar{v}_y$ obtained then give a normal vector to the patterned surface through the cross product $\bar{v}_z = \bar{v}_x \times \bar{v}_y$. The angle $\theta$ between the normal vector $\bar{v}_z$ and the z axis, which is fixed in the apparatus, is given by

$$\cos\theta = \frac{v_{zz}}{|\bar{v}_z|}$$

Usually, as is known in the art, the orientation of a device such as a pen with respect to the pattern on the surface can be expressed using three numbers: rotation, tilt and skew. The skew is defined as the angle of rotation of the pen around its rotational axis. The tilt angle is the angle the pen extends with respect to a normal vector to the surface and the rotation is the angle of rotation of the pen with respect to the normal vector. A zero tilt implies that the rotation is equal to the skew. These angles are illustrated in figure 4, where the normal vector to the surface is denoted N, rotation is denoted R, the tilt is denoted θ and the skew is denoted SK. Note that in figure 4, the axis A of the device illustrates a coinciding optical axis and axis of rotation of the device.

In order to calculate rotation, tilt and skew, we begin by noting from above that

$$\overline{v}_x \equiv \frac{1}{c_0}\hat{v}_x \quad \text{and} \quad \overline{v}_y \equiv \frac{1}{c_0}\hat{v}_y$$

from which equations, $c_0$ can be calculated.

A vector $\overline{v}'_0$ extending from the origin to the surface on which the pattern is located, parallel with the vector $\overline{v}_0$ extending from $P_0$ to the origin, is given by

$$\overline{v}'_0 = c_0 \overline{v}_0$$

We also know from above that the normal vector to the surface, extending away from the pen, is given by

$$\hat{v}_n = \hat{v}_x \times \hat{v}_y$$

Now an equation for the plane of the surface can be calculated. The distance from the origin to the surface is given by

$$h = \frac{\overline{v}'_0 \cdot \hat{v}_n}{|\hat{v}_n|}$$

For each vector $\overline{v}_p = (x_p, y_p, z_p)$ from the origin to the plane of the surface the expression

$$h = \frac{\overline{v}_p \cdot \hat{v}_n}{|\hat{v}_n|}$$

holds, which gives an equation for the plane of the surface:

$$P_x x_p + P_y y_p + P_z z_p + P_0 = 0$$

The axis of the pen is assumed to be parallel with the z-axis. Hence, a vector extending from the origin to the surface, parallel with the axis of the pen can be calculated by inserting $X_p=0$ and $Y_p=0$ in the equation for the plane of the surface:

$$\overline{v}_{0p} = (0,0,-P_0/P_z)$$

The angle between the normal vector and $\overline{v}_{0p}$ gives the tilt:

$$tilt = \cos^{-1}\left(\frac{\bar{v}_{0p} \cdot \hat{v}_n}{\left|\bar{v}_{0p}\right| \cdot \left|\hat{v}_n\right|}\right)$$

If the tilt is non-zero, the skew can be calculated. The projection of the normal vector onto the xy-plane gives:

$$\hat{v}_{np} = (v_{nx}, v_{ny}, 0)$$

Then the skew is given by the angular deviation from the y-axis:

$$\pm skew = \cos^{-1}\left(\frac{\hat{v}_{np} \cdot (0,1,0)}{\left|\hat{v}_{np}\right|}\right)$$

where the skew is positive when $v_{nx}$ is positive and negative otherwise.

The projection of the axis of the pen onto the plane of the surface is now obtained by:

$$\bar{p}_v = \left(proj_x, proj_y\right)$$

where

$$proj_x = \bar{v}_{0p} \cdot \hat{v}_x \quad \text{and} \quad proj_y = \bar{v}_{0p} \cdot \hat{v}_y$$

The angle between this vector and the vectors of the pattern gives the rotation:

$$rot = \pm\cos^{-1}\left(\frac{proj_x}{\left|\bar{p}_v\right|}\right)$$

and, if the tilt is zero, we have:

$$rot = \pm\cos^{-1}\left(\frac{-v_{xx}}{\left|\hat{v}_x\right|}\right)$$

where a positive y-coordinate implies a positive rotation.

The position of the tip of the pen can be calculated by considering the fact that, when the pen changes orientation, during writing for example, the equation for the plane of the surface will change. By considering such a changing equation for the plane of the surface as a sequence of different planes in which the tip of the pen is located, the position of the tip can simply be found by noting that only one point will be common to all planes: the point of the tip of the pen. This calculation can be performed when there are available at least three different equations for the plane of the surface.

A plane is defined by an equation, as indicated above, by it's coefficients. For a plane i, we have:

$$\left(P_{xi}, P_{yi}, P_{zi}, P_{0i}\right)$$

The position of the tip of the pen is given by a system of equations:

$$\begin{cases} P_{x0}x + P_{y0}y + P_{z0}z + P_{00} = 0 \\ P_{x1}x + P_{y1}y + P_{z1}z + P_{01} = 0 \\ \qquad\qquad \vdots \\ P_{xk}x + P_{yk}y + P_{zk}z + P_{0k} = 0 \end{cases}$$

which can be solved in accordance with any procedure known in the art, yielding the xyz-coordinates, a distance vector, for the tip of the pen.

The exact position of the physical tip of the pen may then be utilized to find the exact displacement between the tip and the position calculated from the position coding pattern, i.e. the center of the images obtained. Such a displacement is inherent and, in essence, unavoidable since the optical axis of the lens system of the pen does not coincide with the writing pen. The displacement is not necessarily known in advance due to mechanical inaccuracies when assembling the pen as well as inaccuracies occurring when performing refill-replacement-actions in the case the pen is equipped with a replaceable refill defining the writing tip. In a pen equipped with multiple tips, for example of different colors, the location of the tip with respect to the sensor will vary for each color. Such variations in tip location can be determined , and accounted for, by way of the present invention.

The calculated displacement is preferably used to synchronize the physical track made by the pen and the digitally recorded track as determined by the center of the images. This is advantageous in that it obviates the need to mechanically measure and calibrate the spatial relation between the tip of the pen and the optical system.

**Claims**

1. An apparatus having means for determining a three-dimensional spatial relationship between a surface (S) provided with a predetermined pattern (601) and the apparatus, wherein the pattern (601) is a position-coding pattern comprising a plurality of symbols, each symbol comprising a raster point (5) and at least one marking (6), the raster point forming part of a raster which extends over the surface and the value of each symbol being indicated by a displacement of said marking in relation to a raster point, said apparatus comprising:

   - means (14, 21) for imaging a part of the pattern (601),
   - means (16) for comparing the imaged part (602) of the pattern with the predetermined pattern (601), to produce at least one reference measurement that depends on the three-dimensional orientation $(\overline{V}_x, \overline{V}_y, \overline{V}_z)$ of the surface (S) with respect to the apparatus,
   - means (16) for determining, by means of the reference measurement, the three-dimensional spatial relationship expressed in at least parameters which define the three-dimensional orientation of the surface (S).

2. An apparatus according to claim 1, wherein the means (16) for comparing comprise means for comparing between a number of directed stretches in the imaged part (602) and predetermined vectors which follow from the predetermined pattern (601).

3. An apparatus according to claim 2, comprising means for adaptation according to the least square method.

4. An apparatus according to any one of the preceding claims, wherein the three-dimensional spatial relationship comprises a distance vector between the apparatus and the surface (S) from which the pattern (601) has been imaged.

5. An apparatus according to any one of the preceding claims, wherein the three-dimensional spatial relationship at least comprises an angle between an axis extending through the apparatus and the surface (S).from which the pattern (601) has been imaged.

6. An apparatus according to any one of claims 1-5, wherein the means for comparing (16) comprise means for determining a set of parameters which define a vector which, in relation to a plane extending through the apparatus, unambiguously determines an inclination for the surface (2) from which the pattern (601) has been imaged.

7. An apparatus according to any one of claims 1-5, wherein the means for comparing (16) comprise means for determining a set of parameters which define a vector which unambiguously determines a normal vector for the surface (S) from which the pattern (601) has been imaged.

8. An apparatus according to any one of claims 1-5, wherein the means for comparing (16) comprise means for determining at least one parameter which unambiguously defines an angular orientation for the imaged part (602) about a normal vector for the surface (S) from which the pattern (601) has been imaged.

9. An apparatus according to any one of claims 1-8, wherein the means for comparing (16) comprise means for determining at least one parameter which unambiguously defines at least one of rotation, tilt and skew of the apparatus.

10. An apparatus according to any one of claims 1-5, wherein the imaging means (14, 21) comprise means for one-dimensional pattern imaging.

11. An apparatus according to any one of claims 1-9, wherein the imaging means (14, 21) comprise means for two-dimensional pattern imaging.

12. An apparatus according to any one of claims 1-11, wherein the apparatus is hand-held.

13. An apparatus according to any one of claims 1-12, wherein the apparatus has means (19) for wireless transmission of information.

14. An apparatus according to any one of claims 1-13, wherein the apparatus is in the general form of a pen and comprises means (16) for determining the position of a tip of the pen.

15. An apparatus according to claim 14, wherein said means for imaging comprises a sensor (14) for producing an image of one partial surface of a plurality of partial surfaces on the surface (S), wherein said means for determining the position comprises image-processing means (16), which are arranged to

- locate the predetermined plurality of symbols in the image,
- determine the value of each of said predetermined plurality of symbols,
- separate the position-coding pattern in the image into a first position code for a first coordinate for the partial surface and a second position code for a second coordinate for the partial surface by translating the value of each symbol into at least one first digit for the first position code and at least one second digit for the second position code,
- calculate the first coordinate by means of the first position code and the second coordinate by means of the second position code, and
- calculate a third coordinate, use being made of the determined three-dimensional spatial relationship.

16. A method for determining a three-dimensional spatial relationship between a surface (S) provided with a predetermined pattern (601) and an apparatus capable of at least imaging the surface (S), wherein the pattern (601) is a position-coding pattern comprising a plurality of symbols, each symbol comprising a raster point (5) and at least one marking (6), the raster point forming part of a raster which extends over the surface (S) and the value of each symbol being indicated by a displacement of said marking in relation to a raster point, said method comprising the steps of:

- imaging a part of the pattern (601),
- comparing the imaged part (602) of the pattern with the predetermined pattern (601), to produce at least one reference measurement that depends on the three-dimensional orientation $(\bar{V}_x, \bar{V}_y, \bar{V}_z)$ of the surface (S) with respect to the apparatus, and

- determining, by means of the reference measurement, the three-dimensional spatial relationship expressed in at least parameters which define the three-dimensional orientation of the surface (S).

**17.** A method according to claim 16, wherein the comparison is carried out between a number of directed stretches in the imaged part (602) and predetermined vectors which follow from the predetermined pattern (601).

**18.** A method according to claim 17, wherein the comparison includes an adaptation that is carried out according to the least square method.

**19.** A method according to any one of claims 16-18, wherein the three-dimensional spatial relationship comprises a distance vector between the apparatus and the surface (S) from which the pattern (601) has been imaged.

**20.** A method according to any one of claims 16-19, wherein the three-dimensional spatial relationship at least comprises an angle between an axis extending through the apparatus and the surface (S) from which the pattern (601) has been imaged.

**21.** A method according to any one of claims 16-20, wherein the step of comparing comprises determining a set of parameters which define a vector which, in relation to a plane extending through the apparatus, unambiguously determines an inclination for the surface (S) from which the pattern (601) has been imaged.

**22.** A method according to any one of claims 16-20, wherein the step of comparing comprises determining a set of parameters which define a vector which unambiguously determines a normal vector for the surface (S) from which the pattern (601) has been imaged.

**23.** A method according to any one of claims 16-20, wherein the step of comparing comprises determining at least one parameter which unambiguously defines an angular orientation for the imaged pattern about a normal vector for the surface (S) from which the pattern (601) has been imaged.

**24.** A method according to any one of claims 16-23, wherein the step of comparing comprises determining at least one parameter which unambiguously defines at least one of rotation, tilt and skew of the apparatus.

**25.** A method according to any one of claims 16-20, wherein the step of imaging comprises one-dimensional pattern imaging.

**26.** A method according to any one of claims 16-23, wherein the step of imaging comprises two-dimensional pattern imaging.

**27.** A method according to any one of claims 16-26, wherein the apparatus is in the general form of a pen and the method comprises the further step of determining the position of a tip of the pen.

**28.** A method according to claim 27, wherein the step of imaging comprises producing an image of one partial surface of a plurality of partial surfaces on the surface (S), said method further comprises carrying out image-processing, which comprises

- locating the predetermined plurality of symbols in the image,
- determining the value of each of said predetermined plurality of symbols,
- separating the position-coding pattern in the image into a first position code for a first coordinate for the partial surface and a second position code for a second coordinate for the partial surface by translating the value of each symbol into at least one first digit for the first position code and at least one second digit for the second position code,
- calculating the first coordinate by means of the first position code and the second coordinate by means of the second position code, and
- calculating a third coordinate, use being made of the three-dimensional spatial relationship.

**29.** A computer program which is stored in a computer-readable memory medium and which comprises instructions for making a computer carry out the method according to any one of claims 16-28.

**EP 1 269 408 B1**

**Patentansprüche**

1. Vorrichtung mit Mitteln zum Bestimmen einer dreidimensionalen räumlichen Beziehung zwischen einer mit einem vorbestimmten Muster (601) versehenen Oberfläche (S) und der Vorrichtung, wobei das Muster (601) ein Positionscodierungsmuster ist, das eine Vielzahl von Symbolen umfasst, wobei jedes Symbol einen Rasterpunkt (5) und mindestens eine Markierung (6) umfasst, wobei der Rasterpunkt einen Teil eines Rasters bildet, das sich über die Oberfläche erstreckt, und der Wert jedes Symbols durch eine Versetzung der Markierung in Bezug auf einen Rasterpunkt angegeben wird, wobei die Vorrichtung Folgendes umfasst:

   - Mittel (14, 21) zum Abbilden eines Teils des Musters (601),
   - Mittel (16) zum Vergleichen des abgebildeten Teils (602) des Musters mit dem vorbestimmten Muster (601), um mindestens eine Referenzmessung zu produzieren, die von der dreidimensionalen Orientierung ($\overline{V}_x$, $\overline{V}_y$, $\overline{V}_z$) der Oberfläche (S) mit Bezug auf die Vorrichtung abhängt,
   - Mittel (16) zum Bestimmen der dreidimensionalen räumlichen Beziehung, die mindestens in Parametern, die die dreidimensionale Orientierung der Oberfläche (S) definieren, ausgedrückt wird, mittels der Referenzmessung.

2. Vorrichtung nach Anspruch 1, wobei die Mittel (16) zum Vergleichen Mittel zum Vergleichen zwischen einer Anzahl von gerichteten Strecken in dem abgebildeten Teil (602) und vorbestimmten Vektoren, die aus dem vorbestimmten Muster (601) folgen, umfassen.

3. Vorrichtung nach Anspruch 2 mit Mitteln zur Anpassung gemäß dem Least-Square-Verfahren.

4. Vorrichtung nach einem der vorhergehenden Ansprüche, wobei die dreidimensionale räumliche Beziehung einen Distanzvektor zwischen der Vorrichtung und der Oberfläche (S), woraus das Muster (601) abgebildet wurde, umfasst.

5. Vorrichtung nach einem der vorhergehenden Ansprüche, wobei die dreidimensionale räumliche Beziehung mindestens einen Winkel zwischen einer sich durch die Vorrichtung erstreckenden Achse und der Oberfläche (S), woraus das Muster (601) abgebildet wurde, umfasst.

6. Vorrichtung nach einem der Ansprüche 1-5, wobei die Mittel zum Vergleichen (16) Mittel zum Bestimmen einer Menge von Parametern, die einen Vektor definieren, der in Bezug auf eine sich durch die Vorrichtung erstreckende Ebene eindeutig eine Neigung für die Oberfläche (S), woraus das Muster (601) abgebildet wurde, bestimmt, umfassen.

7. Vorrichtung nach einem der Ansprüche 1-5, wobei die Mittel zum Vergleichen (16) Mittel zum Bestimmen einer Menge von Parametern, die einen Vektor definieren, der eindeutig einen Normalenvektor für die Oberfläche (S), woraus das Muster (601) abgebildet wurde, bestimmt, umfassen.

8. Vorrichtung nach einem der Ansprüche 1-5, wobei die Mittel zum Vergleichen (16) Mittel zum Bestimmen mindestens eines Parameters, der eindeutig eine Winkelorientierung für den abgebildeten Teil (602) um einen Normalenvektor für die Oberfläche (S), woraus das Muster (601) abgebildet wurde, bestimmt, umfassen.

9. Vorrichtung nach einem der Ansprüche 1-8, wobei die Mittel zum Vergleichen (16) Mittel zum Bestimmen mindestens eines Parameters, der eindeutig Drehung und/oder Schräglage und/oder Schiefe der Vorrichtung definiert, umfassen.

10. Vorrichtung nach einem der Ansprüche 1-5, wobei die Abbildungsmittel (14, 21) Mittel zur eindimensionalen Musterabbildung umfassen.

11. Vorrichtung nach einem der Ansprüche 1-9, wobei die Abbildungsmittel (14, 21) Mittel zur zweidimensionalen Musterabbildung umfassen.

12. Vorrichtung nach einem der Ansprüche 1-11, wobei die Vorrichtung in der Hand gehalten wird.

13. Vorrichtung nach einem der Ansprüche 1-12, wobei die Vorrichtung Mittel (19) zur drahtlosen Übertragung von Informationen aufweist.

14. Vorrichtung nach einem der Ansprüche 1-13, wobei die Vorrichtung in der allgemeinen Form eines Stifts vorliegt und Mittel (16) zum Bestimmen der Position einer Spitze des Stifts umfasst.

**15.** Vorrichtung nach Anspruch 14, wobei die Mittel zum Abbilden einen Sensor (14) zum Produzieren eines Bildes einer Partialoberfläche einer Vielzahl von Partialoberflächen auf der Oberfläche (S) umfassen, wobei die Mittel zum Bestimmen der Position Bildverarbeitungsmittel (16) umfassen, die für Folgendes ausgelegt sind:

- Finden der vorbestimmten Vielzahl von Symbolen in dem Bild,
- Bestimmen des Werts jedes der Vielzahl von Symbolen,
- Auftrennen des Positionscodierungsmusters in dem Bild in einen ersten Positionscode für eine erste Koordinate für die Partialoberfläche und einen zweiten Positionscode für eine zweite Koordinate für die Partialoberfläche durch Übersetzen des Werts jedes Symbols in mindestens eine erste Stelle für den ersten Positionscode und mindestens eine zweite Stelle für den zweiten Positionscode,
- Berechnen der ersten Koordinate mittels des ersten Positionscodes und der zweiten Koordinate mittels des zweiten Positionscodes und
- Berechnen einer dritten Koordinate, wobei die bestimmte dreidimensionale räumliche Beziehung ausgenutzt wird.

**16.** Verfahren zum Bestimmen einer dreidimensionalen räumlichen Beziehung zwischen einer mit einem vorbestimmten Muster (601) versehenen Oberfläche (S) und einer Vorrichtung, die mindestens zur Abbildung der Oberfläche (S) fähig ist, wobei das Muster (601) ein Positionscodierungsmuster ist, das eine Vielzahl von Symbolen umfasst, wobei jedes Symbol einen Rasterpunkt (5) und mindestens eine Markierung (6) umfasst, wobei der Rasterpunkt einen Teil eines Rasters bildet, das sich über die Oberfläche (S) erstreckt, und der Wert jedes Symbols durch eine Versetzung der Markierung in Bezug auf einen Rasterpunkt angegeben wird, mit den folgenden Schritten:

- Abbilden eines Teils des Musters (601),
- Vergleichen des abgebildeten Teils (602) des Musters mit dem vorbestimmten Muster (601), um mindestens eine Referenzmessung zu produzieren, die von der dreidimensionalen Orientierung ($\overline{v}_x$, $\overline{v}_y$, $\overline{v}_z$) der Oberfläche (S) mit Bezug auf die Vorrichtung abhängt,
- Bestimmen der dreidimensionalen räumlichen Beziehung, die mindestens in Parametern, die die dreidimensionale Orientierung der Oberfläche (S) definieren, ausgedrückt wird, mittels der Referenzmessung.

**17.** Verfahren nach Anspruch 16, wobei der Vergleich zwischen einer Anzahl von gerichteten Strecken in dem abgebildeten Teil (602) und vorbestimmten Vektoren, die aus dem vorbestimmten Muster (601) folgen, ausgeführt wird.

**18.** Verfahren nach Anspruch 17, wobei der Vergleich eine Anpassung umfasst, die gemäß dem Least-Square-Verfahren ausgeführt wird.

**19.** Verfahren nach einem der Ansprüche 16-18, wobei die dreidimensionale räumliche Beziehung einen Distanzvektor zwischen der Vorrichtung und der Oberfläche (S), woraus das Muster (601) abgebildet wurde, umfasst.

**20.** Verfahren nach einem der Ansprüche 16-19, wobei die dreidimensionale räumliche Beziehung mindestens einen Winkel zwischen einer sich durch die Vorrichtung erstreckenden Achse und der Oberfläche (S), woraus das Muster (601) abgebildet wurde, umfasst.

**21.** Verfahren nach einem der Ansprüche 16-20, wobei der Schritt des Vergleichens das Bestimmen einer Menge von Parametern umfasst, die einen Vektor definieren, der in Bezug auf eine sich durch die Vorrichtung erstreckende Ebene eindeutig eine Neigung für die Oberfläche (S), woraus das Muster (601) abgebildet wurde, bestimmt.

**22.** Verfahren nach einem der Ansprüche 16-20, wobei der Schritt des Vergleichens das Bestimmen einer Menge von Parametern umfasst, die einen Vektor definieren, der eindeutig einen Normalenvektor für die Oberfläche (S), woraus das Muster (601) abgebildet wurde, bestimmt.

**23.** Verfahren nach einem der Ansprüche 16-20, wobei der Schritt des Vergleichens das Bestimmen mindestens eines Parameters umfasst, der eindeutig eine Winkelorientierung für das abgebildete Muster um einen Normalenvektor für die Oberfläche (S), woraus das Muster (601) abgebildet wurde, bestimmt.

**24.** Verfahren nach einem der Ansprüche 16-23, wobei der Schritt des Vergleichens das Bestimmen mindestens eines Parameters umfasst, der eindeutig Drehung und/oder Schräglage und/oder Schiefe der Vorrichtung definiert.

**25.** Verfahren nach einem der Ansprüche 16-20, wobei der Schritt des Abbildens eindimensionale Musterabbildung umfasst.

**26.** Verfahren nach einem der Ansprüche 16-23, wobei der Schritt des Abbildens zweidimensionale Musterabbildung umfasst.

**27.** Verfahren nach einem der Ansprüche 16-26, wobei die Vorrichtung in der allgemeinen Form eines Stifts vorliegt und das Verfahren den weiteren Schritt des Bestimmens der Position einer Spitze des Stifts umfasst.

**28.** Verfahren nach Anspruch 27, wobei der Schritt des Abbildens das Produzieren eines Bildes einer Partialoberfläche einer Vielzahl von Partialoberflächen auf der Oberfläche (S) umfasst, wobei das Verfahren ferner das Ausführen von Bildverarbeitung umfasst, die Folgendes umfasst:

- Finden der vorbestimmten Vielzahl von Symbolen in dem Bild,
- Bestimmen des Werts jedes der vorbestimmten Vielzahl von Symbolen,
- Auftrennen des Positionscodierungsmusters in dem Bild in einen ersten Positionscode für eine erste Koordinate für die Partialoberfläche und einen zweiten Positionscode für eine zweite Koordinate für die Partialoberfläche durch Übersetzen des Werts jedes Symbols in mindestens eine erste Stelle für den ersten Positionscode und mindestens eine zweite Stelle für den zweiten Positionscode,
- Berechnen der ersten Koordinate mittels des ersten Positionscodes und der zweiten Koordinate mittels des zweiten Positionscodes und
- Berechnen einer dritten Koordinate, wobei die dreidimensionale räumliche Beziehung ausgenutzt wird.

**29.** Computerprogramm, das in einem computerlesbaren Speichermedium gespeichert ist und Anweisungen umfasst, die bewirken, dass ein Computer das Verfahren nach einem der Ansprüche 16-28 ausführt.


**Revendications**

**1.** Appareil possédant un moyen permettant de déterminer une relation spatiale tridimensionnelle entre une surface (S) munie d'un motif prédéterminé (601) et l'appareil, dans lequel le motif (601) est un motif de codage de position comprenant une pluralité de symboles, chaque symbole comprenant un point (5) de trame et au moins un marquage (6), le point de trame formant une partie de trame qui s'étend sur la surface, et la valeur de chaque symbole étant indiquée par un déplacement dudit marquage par rapport à un point de trame, ledit appareil comprenant :

- des moyens (14, 21) permettant de former l'image d'une partie du motif (601),
- un moyen (16) permettant de comparer la partie en image (602) du motif au motif prédéterminé (601), afin de produire au moins une mesure de référence qui dépend de l'orientation en trois dimensions ($\overline{v}_x$, $\overline{v}_y$, $\overline{v}_z$) de la surface (S) par rapport à l'appareil,
- un moyen (16) permettant de déterminer, au moyen de la mesure de référence, la relation spatiale tridimensionnelle exprimée dans le ou les paramètres qui définissent l'orientation tridimensionnelle de la surface (S).

**2.** Appareil selon la revendication 1, dans lequel le moyen (16) destiné à une comparaison comprend un moyen permettant de d'effectuer une comparaison entre un nombre d'étirements dirigés dans la partie en image (602) et les vecteurs prédéterminés qui s'ensuivent du motif prédéterminé (601).

**3.** Appareil selon la revendication 2, comprenant un moyen destiné à une adaptation en fonction de la méthode des moindres carrés.

**4.** Appareil selon l'une quelconque des revendications précédentes, dans lequel la relation spatiale tridimensionnelle comprend un vecteur de distance entre l'appareil et la surface (S) à partir de laquelle le motif (601) a été formé en une image.

**5.** Appareil selon l'une quelconque des revendications précédentes, dans lequel la relation spatiale tridimensionnelle comprend au moins un angle entre un axe s'étendant au travers de l'appareil et la surface (S) à partir de laquelle le motif (601) a été formé en une image.

**6.** Appareil selon l'une quelconque des revendications 1 à 5, dans lequel le moyen de comparaison (16) comprend un moyen permettant de déterminer un jeu de paramètres qui définissent un vecteur qui détermine sans ambiguïté, par rapport à un plan s'étendant au travers de l'appareil, une inclinaison pour la surface (2) à partir de laquelle le motif (601) a été formé en une image.

**7.** Appareil selon l'une quelconque des revendications 1 à 5, dans lequel le moyen de comparaison (16) comprend un moyen permettant de déterminer un jeu de paramètres qui définissent un vecteur qui détermine sans ambiguïté un vecteur normal à la surface (S) à partir de laquelle le motif (601) a été formé en une image.

**8.** Appareil selon l'une quelconque des revendications 1 à 5, dans lequel le moyen de comparaison (16) comprend un moyen permettant de déterminer au moins un paramètre qui définit sans ambiguïté une orientation angulaire pour la partie (602) formée en image autour d'un vecteur normal à la surface (S) à partir de laquelle le motif (601) a été formé en une image.

**9.** Appareil selon l'une quelconque des revendications 1 à 8, dans lequel le moyen de comparaison (16) comprend un moyen permettant de déterminer au moins un paramètre qui définit sans ambiguïté au moins l'une d'une rotation, d'une inclinaison et d'une obliquité de l'appareil.

**10.** Appareil selon l'une quelconque des revendications 1 à 5, dans lequel les moyens de formation d'image (14, 21) comprennent un moyen destiné à former l'image d'un motif unidimensionnel.

**11.** Appareil selon l'une quelconque des revendications 1 à 9, dans lequel les moyens de formation d'image (14, 21) comprennent un moyen destiné à former l'image d'un motif bidimensionnel.

**12.** Appareil selon l'une quelconque des revendications 1 à 11, dans lequel l'appareil est à main.

**13.** Appareil selon l'une quelconque des revendications 1 à 12, dans lequel l'appareil possède un moyen (19) destiné à une transmission sans fil de l'information.

**14.** Appareil selon l'une quelconque des revendications 1 à 13, dans lequel l'appareil se présente sous la forme générale d'un crayon et comprend un moyen (16) permettant de déterminer la position de la pointe du crayon.

**15.** Appareil selon la revendication 14, dans lequel ledit moyen permettant de former une image comprend un capteur (14) destiné à fournir une image d'une surface partielle faisant partie d'une pluralité de surfaces partielles sur la surface (S), dans lequel ledit moyen de détermination de la position comprend un moyen de traitement d'image (16) qui est agencé pour :

- localiser la pluralité prédéterminée de symboles dans l'image,
- déterminer la valeur de chacun de ladite pluralité prédéterminée de symboles,
- séparer le motif de codage de position dans l'image en un premier code de position destiné à une première coordonnée pour la surface partielle et en un deuxième code de position destiné à une deuxième coordonnée pour la surface partielle en traduisant la valeur de chaque symbole en au moins un premier nombre pour le premier code de position et en au moins un deuxième nombre pour le deuxième code de position,
- calculer la première coordonnée au moyen du premier code de position et la deuxième coordonnée au moyen du second code de position, et
- calculer une troisième coordonnée, en faisant utilisation de la relation spatiale tridimensionnelle déterminée.

**16.** Procédé permettant de déterminer une relation spatiale tridimensionnelle entre une surface (S) munie d'un motif prédéterminé (601) et un appareil pouvant au moins former une image de la surface (S), dans lequel le motif (601) est un motif de codage de position comprenant une pluralité de symboles, chaque symbole comprenant un point de trame (5) et au moins un marquage (6), le point de trame formant une partie de trame qui s'étend sur la surface (S) et la valeur de chaque symbole étant indiquée par un déplacement dudit marquage par rapport à un point de trame, ledit procédé comprenant les étapes consistant à :

- former une image d'une partie du motif (601),
- comparer la partie en image (602) du motif au motif prédéterminé (601) afin de produire au moins une mesure de référence qui dépend de l'orientation en trois dimensions $(\overline{v}_x, \overline{v}_y, \overline{v}_z)$ de la surface (S) par rapport à l'appareil, et
- déterminer, au moyen de la mesure de référence, la relation spatiale tridimensionnelle exprimée dans le ou les paramètres qui définissent l'orientation tridimensionnelle de la surface (S).

**17.** Procédé selon la revendication 16, dans lequel la comparaison est effectuée entre un certain nombre d'étirements dirigés dans la partie en image (602) et les vecteurs prédéterminés qui s'ensuivent du motif prédéterminé (601).

**18.** Procédé selon la revendication 17, dans lequel la comparaison inclut une adaptation qui est effectuée en fonction de la méthode des moindres carrés.

**19.** Procédé selon l'une quelconque des revendications 16 à 18, dans lequel la relation spatiale tridimensionnelle comprend un vecteur de distance entre l'appareil et la surface (S) à partir de laquelle le motif (601) a été formé en une image.

**20.** Procédé selon l'une quelconque des revendications 16 à 19, dans lequel la relation spatiale tridimensionnelle comprend au moins un angle entre un axe s'étendant au travers de l'appareil et la surface (S) à partir de laquelle le motif (601) a été formé en une image.

**21.** Procédé selon l'une quelconque des revendications 16 à 20, dans lequel l'étape de comparaison comprend la détermination d'un jeu de paramètres qui définissent un vecteur qui détermine sans ambiguïté, par rapport à un plan s'étendant au travers de l'appareil, une inclinaison pour la surface (S) à partir de laquelle le motif (601) a été formé en une image.

**22.** Procédé selon l'une quelconque des revendications 16 à 20, dans lequel l'étape de comparaison comprend la détermination d'un jeu de paramètres qui définissent un vecteur qui détermine sans ambiguïté un vecteur normal à la surface (S) à partir de laquelle le motif (601) a été formé en une image.

**23.** Procédé selon l'une quelconque des revendications 16 à 20, dans lequel l'étape de comparaison comprend la détermination d'au moins un paramètre qui définit sans ambiguïté une orientation angulaire pour le motif formé en image autour d'un vecteur normal à la surface (S) à partir de laquelle le motif (601) a été formé en une image.

**24.** Procédé selon l'une quelconque des revendications 16 à 23, dans lequel l'étape de comparaison comprend la détermination d'au moins un paramètre qui définit sans ambiguïté au moins l'une d'une rotation, d'une inclinaison et d'une obliquité de l'appareil.

**25.** Procédé selon l'une quelconque des revendications 16 à 20, dans lequel l'étape consistant à former une image comprend la formation d'une image d'un motif unidimensionnel.

**26.** Procédé selon l'une quelconque des revendications 16 à 23, dans lequel l'étape consistant à former une image comprend la formation d'une image d'un motif bidimensionnel.

**27.** Procédé selon l'une quelconque des revendications 16 à 26, dans lequel l'appareil se présente sous la forme générale d'un crayon et dans lequel le procédé comprend l'étape suivante consistant à déterminer la position de la pointe du crayon.

**28.** Procédé selon la revendication 27, dans lequel l'étape de formation d'une image comprend la fourniture d'une image d'une surface partielle faisant partie d'une pluralité de surfaces partielles sur la surface (S), ledit procédé comprenant en outre l'exécution d'un traitement d'image qui comprend :

- la localisation de la pluralité prédéterminée de symboles dans l'image,
- la détermination de la valeur de chacun de ladite pluralité prédéterminée de symboles,
- la séparation du motif de codage de position dans l'image en un premier code de position destiné à une première coordonnée pour la surface partielle et en un deuxième code de position destiné à une deuxième coordonnée pour la surface partielle en traduisant la valeur de chaque symbole en au moins un premier nombre pour le premier code de position et en au moins un deuxième nombre pour le deuxième code de position,
- le calcul de la première coordonnée au moyen du premier code de position et de la deuxième coordonnée au moyen du deuxième code de position, et
- le calcul d'une troisième coordonnée en faisant utilisation de la relation spatiale tridimensionnelle.

**29.** Programme informatique qui est mémorisé dans un support de mémoire pouvant être lu par un ordinateur et qui comprend des instructions pour réaliser une exécution par ordinateur du procédé conforme à l'une quelconque des revendications 16 à 28.

EP 1 269 408 B1

Fig. 1

Fig. 2

*Fig. 3*

*Fig. 4*

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5198623 A
- US 5101096 A
- US 5611506 A
- US 5852434 A
- US 5051736 A
- EP 0469864 A
- WO 0073983 A
- SE 0001895 W
- WO 0126032 A
- SE 0001897 W
- WO 0126033 A
- WO 0116691 A
- WO 9820446 A